# EUROPEAN PATENT APPLICATION

(11) **EP 4 611 107 A1**
(43) Date of publication of application: **03.09.2025**
(21) Application number: 24840018.6
(22) Date of filing: 07.07.2024
(51) Int. Cl.: H01M 10/0587, H01M 10/04, H01M 10/052, H01M 50/107

(54) **ELECTRODE ASSEMBLY AND SECONDARY BATTERY COMPRISING SAME**

(30) Priority: 07.07.2023 KR 20230088068; 05.07.2024 KR 20240089045
(71) Applicant: LG Energy Solution, Ltd., Seoul 07335 (KR)
(72) Inventor: KIM, Jinsoo, Daejeon 34122 (KR); PARK, Jungyeon, Daejeon 34122 (KR)
(74) Representative: Goddar, Heinz J.
(86) International application number: PCT/KR2024/009618
(87) International publication number: WO 2025/014206

(57) **Abstract**

The present invention relates to an electrode assembly and a secondary battery comprising same. Specifically, the present invention relates to an electrode assembly and a secondary battery, wherein a negative electrode in a core part of the electrode assembly in which the negative electrode, a separator, and a positive electrode are sequentially stacked and wound includes: a negative electrode coated portion including a negative electrode current collector and a negative electrode active material layer provided on at least one surface of the negative electrode current collector; and a negative electrode uncoated portion including a negative electrode current collector not provided with the negative electrode active material layer, the longitudinal length of the negative electrode coated portion extending from the longitudinal end of the positive electrode being adjusted to a specific range.

## Description

### [Technical Field]

The present invention relates to an electrode assembly and a secondary battery including the same, and more particularly, to an electrode assembly in which an input amount of a negative electrode in a core part has been controlled and a cylindrical secondary battery including the electrode assembly. This application claims priority to and the benefit of Korean Patent Application No. 10-2023-0088068 filed in the Korean Intellectual Property Office on July 7, 2023, the entire contents of which are incorporated herein by reference.

### [Background Art]

For a cylindrical battery, a jelly-roll type electrode assembly is manufactured by rolling a long electrode having a predetermined width into a roll form. The cylindrical battery manufactured by inserting such an electrode assembly into a battery case undergoes repeated contraction/expansion of an electrode during charging and discharging. In particular, when an in-tab located in a core of the electrode assembly or a degree of contraction/expansion of the electrode assembly increases due to a silicon-based active material added in a negative electrode, a pressure acting on a core part of the electrode assembly greatly increases.

As low-resistance/high-capacity designs recently increase, an electrode assembly includes a plurality of tabs or a silicon-based active material is added, in many cases. Accordingly, the possibility of deformation of the electrode assembly located in the core part due to contraction/expansion of the electrode assembly increases. In particular, when a separator located between the negative electrode and the positive electrode is damaged, the negative electrode and the positive electrode come into direct contact with each other, causing heat generation and ignition due to an internal short circuit.

In order to solve the problems of the separator damage and internal short circuit caused by the deformation of the electrode assembly, it is necessary to develop a technique capable of protecting the negative electrode and separator in the corresponding region and suppressing the occurrence of the internal short circuit.

### [Detailed Description of the Invention]

### [Technical Problem]

The present invention has been made in an effort to provide an electrode assembly whose design has been changed and a secondary battery including the electrode assembly.

However, the problem to be solved by the present invention is not limited to the above-described problem, and other problems not described will be apparently understood by one skilled in the art from the following description.

### [Technical Solution]

An exemplary embodiment of the present invention provides an electrode assembly in which a negative electrode, a separator, and a positive electrode are sequentially stacked and wound, wherein in a core part of the electrode assembly, the negative electrode includes a negative electrode coated portion including a negative electrode current collector and a negative electrode active material layer provided on at least one surface of the negative electrode current collector; and a negative electrode uncoated portion including the negative electrode current collector not provided with the negative electrode active material layer, and a length, in a longitudinal direction, of the negative electrode coated portion extending from a longitudinal end portion of the positive electrode is 0.5 turn or less from the longitudinal end portion of the positive electrode.

Another exemplary embodiment of the present invention provides a secondary battery including the electrode assembly described above, and a battery case for accommodating the electrode assembly.

### [Advantageous Effects]

The electrode assembly according to an exemplary embodiment of the present invention can facilitate sliding of the negative electrode during charging and discharging of a battery by controlling an input amount of the negative electrode in the core part and can reduce relative sliding of the end portion of the positive electrode to the negative electrode.

In addition, the secondary battery according to an exemplary embodiment of the present invention can prevent damage to the negative electrode and separator due to relative sliding of the end portion of the positive electrode and prevent an internal short circuit between the positive electrode and negative electrode, resulting in improvements in battery stability and life characteristics.

The effects of the present invention are not limited to the foregoing effects, and effects not described will be apparently understood by one skilled in the art from the present specification and accompanying drawings.

### [Brief Description of Drawings]

FIGS. 1 to 3 schematically show an electrode assembly according to an exemplary embodiment of the present invention.
FIG. 4 is a CT image showing results of cycle stability evaluation for secondary batteries according to Example 1, Comparative Example 1 and Comparative Example 2.
FIG. 5 shows a method for evaluating whether a separator in a core part of an electrode assembly according to an exemplary embodiment of the present invention has been damaged.
FIG. 6 is a graph showing results of evaluation as to whether a separator in a core part of secondary batteries according to Example 1 and Comparative Example 2 has been damaged.
FIGS. 7 and 8 show an electrode assembly and a secondary battery including the same according to an exemplary embodiment of the present invention.

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

Throughout the specification herein, "the winding axis of the electrode assembly" may refer to an imaginary line located at a center of a hollow portion (H) of a core part of a wound electrode assembly (1). The hollow portion (H) of the core part may be formed at a position of a winding core (mandrel) (C) removed after being used for winding a component included in the electrode assembly.

Accordingly, the components included in the wound electrode assembly may each define a direction of a winding axis of the electrode assembly, that is, a direction (Z-axis direction) parallel to the winding axis of the electrode assembly.

In addition, based on a cross-section (X-Y plane) perpendicular to the winding axis of the electrode assembly, the components included in the wound electrode assembly may each define a direction opposite to the winding axis of the electrode assembly, that is, a direction toward a center of the hollow portion (H) of the core part of the wound electrode assembly (1).

Hereinafter, the present invention will be described in detail with reference to the drawings. However, it should be noted that the drawings are provided for illustrating the present invention, and the scope of the present invention is not limited by the drawings.

An exemplary embodiment of the present invention provides an electrode assembly in which a negative electrode, a separator, and a positive electrode are sequentially stacked and wound, wherein in a core part of the electrode assembly, the negative electrode includes a negative electrode coated portion including a negative electrode current collector and a negative electrode active material layer provided on at least one surface of the negative electrode current collector; and a negative electrode uncoated portion including the negative electrode current collector not provided with the negative electrode active material layer, and wherein a length, in a longitudinal direction, of the negative electrode coated portion extending from a longitudinal end portion of the positive electrode is 0.5 turn or less from the longitudinal end portion of the positive electrode.

The electrode assembly according to an exemplary embodiment of the present invention can facilitate sliding of the negative electrode during charging and discharging of a battery by controlling an input amount of the negative electrode in the core part and can reduce relative sliding of the end portion of the positive electrode to the negative electrode. In addition, the electrode assembly can reduce relative sliding of the end portion of the positive electrode to the negative electrode during charging and discharging of the battery, preventing damage to the negative electrode and separator from deformation of the electrode assembly due to contraction/expansion of the electrodes, and preventing an internal short circuit between the positive electrode and the negative electrode, resulting in improvements in battery stability and life characteristics. Specifically, the effect of reducing the relative sliding of the end portion of the positive electrode due to the control of the input amount of the negative electrode in the core part within the foregoing range may be better when a negative electrode in-tab is included.

Here, the 'core part' is a region including a hollow portion located on a winding axis of the electrode assembly, and a part of a stack structure of the wound negative electrode/separator/ positive electrode, and may refer to a region within 2 turns of the positive electrode from one end portion, in a longitudinal direction, of the positive electrode of the stack structure located on the innermost side of the electrode assembly.

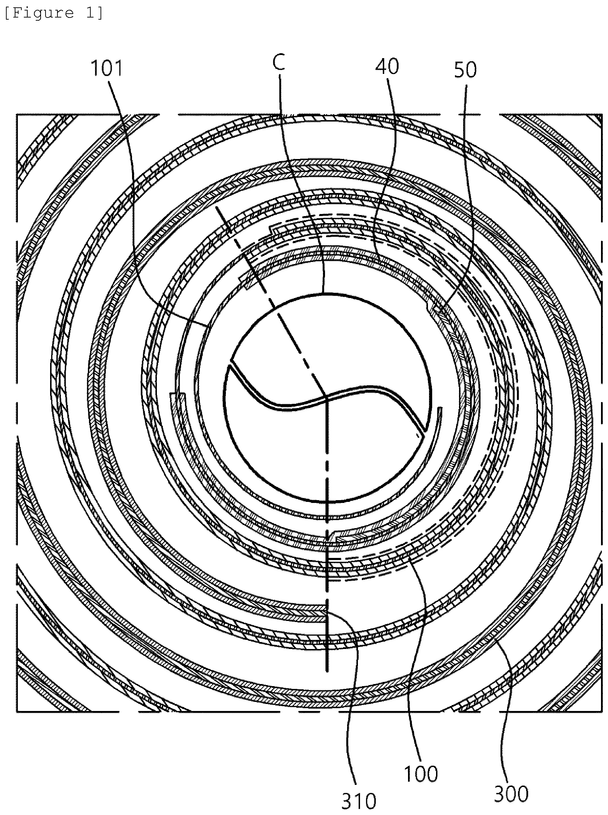

FIGS. 1 to 3 schematically show an electrode assembly according to an exemplary embodiment of the present invention.

Referring to FIGS. 1 to 3, an electrode assembly according to an exemplary embodiment of the present invention may be an electrode assembly in which negative electrode 100, 100', separator 20, 20', and a positive electrode 300 are stacked and wound. In the core part of the electrode assembly, the negative electrode 100 may include a negative electrode current collector 101; and negative electrode active material layers 102 and 103 provided on at least one surface of the negative electrode current collector 101. Specifically, the negative electrode 100 may include a negative electrode coated portion 10 including a negative electrode current collector 101 and negative electrode active material layers 102 and 103 provided on at least one surface of the negative electrode current collector 101; and a negative electrode uncoated portion 12 including the negative electrode current collector 101 not provided with the negative electrode active material layer.

According to an exemplary embodiment of the present invention, the positive electrode 300 may include a first surface in a direction of a winding axis of the electrode assembly and a second surface opposite to the first surface, and the negative electrode 100 in contact with the first surface of the positive electrode may include the negative electrode coated portion 10 and the negative electrode uncoated portion 12 extending from a longitudinal end portion 310 of the positive electrode.

According to an exemplary embodiment of the present invention, the negative electrode coated portion 10 extends from the longitudinal end portion 310 of the positive electrode and may refer to a region ranging from the longitudinal end portion 310 of the positive electrode to a point where the negative electrode coated portion is in contact with the negative electrode uncoated portion extending from the negative electrode coated portion and having a predetermined length L1, in the longitudinal direction.

According to an exemplary embodiment of the present invention, the negative electrode uncoated portion 12 extends from the negative electrode coated portion 10 and may refer to a region ranging from a point where it is in contact with a longitudinal end portion of the negative electrode coated portion to a longitudinal end portion of the negative electrode and having a predetermined length L2, in the longitudinal direction.

According to an exemplary embodiment of the present invention, a length, in the longitudinal direction, of the negative electrode coated portion extending from the longitudinal end portion of the positive electrode may be 0.5 turn or less from the longitudinal end portion of the positive electrode. Specifically, the length, in the longitudinal direction, of the negative electrode coated portion extending from the longitudinal end portion of the positive electrode may be 0.45 turn or less or 0.4 turn or less from the longitudinal end portion of the positive electrode.

Here, 1 turn may refer to a length required to wind a positive electrode or negative electrode included in an electrode assembly by 360° from a reference point, and the length may be determined depending on an outer diameter of a winding core (mandrel) (C) used for winding the electrode assembly, a thickness of the electrode, and the number of windings of the electrode located on an inner side. For example, one turn of the negative electrode 100 in contact with the first surface of the positive electrode 300 may refer to a length required to wind the negative electrode 100 by 360° from the longitudinal end portion 310 of the positive electrode in a direction of an end portion of the negative electrode 100 where the winding starts.

According to an exemplary embodiment of the present invention, the length, in the longitudinal direction, of the negative electrode coated portion extending from the longitudinal end portion of the positive electrode may be less than 70% based on 100% of a circumference of an inner peripheral surface of the electrode assembly. Specifically, the length, in the longitudinal direction, of the negative electrode coated portion extending from the longitudinal end portion of the positive electrode may be 68% or less, 66% or less, 64% or less, or 62% or less based on 100% of the circumference of the inner peripheral surface of the electrode assembly.

Here, the "circumference of the inner peripheral surface' may refer to a circumference of a virtual circle having the largest value as a radius among distances from the winding axis of the electrode assembly to the innermost layer in contact with the hollow portion (H) of the core part of the electrode assembly, and a length thereof may be determined depending on an outer diameter of the winding core (C) used for winding of the electrode assembly. For example, the circumference of the inner peripheral surface may have a value of about 10 mm.

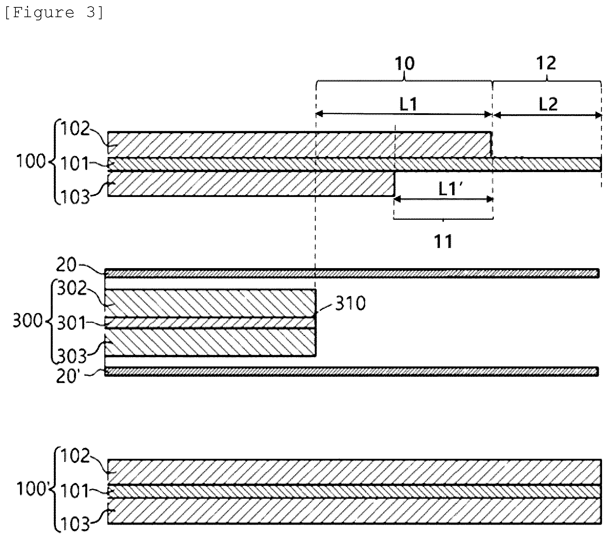

According to an exemplary embodiment of the present invention, in the core part of the electrode assembly, the negative electrode and the separator may extend longer than the longitudinal end portion of the positive electrode. Specifically, referring FIG. 3, the negative electrode 100 and the separators 20 and 20' may extend longer than the longitudinal end portion 310 of the positive electrode. In other words, the negative electrode and the separator are first wound, which may be then wound together with the positive electrode. For example, the negative electrode and the separator are wound around the winding core by 0.5 turn or more, which may be then wound together with the positive electrode. That is, in the core part of the electrode assembly, longitudinal end portions of the negative electrode and the separator may be located on a more inner side than the longitudinal end portion of the positive electrode.

According to an exemplary embodiment of the present invention, the length, in the longitudinal direction, of the negative electrode extending from the longitudinal end portion of the positive electrode may be 1.5 turns or more and 2.5 turns or less from the longitudinal end portion of the positive electrode. Specifically, referring to FIGS. 1 and 3, the length L1+L2, in the longitudinal direction, of the negative electrode extending from the longitudinal end portion 310 of the positive electrode may be 1.6 turns or more or 1.7 turns or more and 2.4 turns or less or 2.3 turns or less from the longitudinal end portion 310 of the positive electrode.

When the length, in the longitudinal direction, of the negative electrode extending from the longitudinal end portion of the positive electrode satisfies the above-described range, the negative electrode may have a length of the negative electrode uncoated portion suitable for further including a negative electrode tab 50, specifically a negative electrode in-tab, provided on one surface of the negative electrode current collector, which will be described below. For example, when a negative electrode in-tab is provided, the length L2 of the negative electrode uncoated portion may be about 19 mm. In addition, the effect of reducing the relative sliding of the end portion of the positive electrode due to the control of the length, in the longitudinal direction, of the negative electrode within the above-described range may be better when the negative electrode in-tab is included.

According to an exemplary embodiment of the present invention, the length, in the longitudinal direction, of the negative electrode coated portion extending from the longitudinal end portion of the positive electrode may be 35% or less based on 100% of the length, in the longitudinal direction, of the negative electrode uncoated portion extending from the end portion of the negative electrode coated portion. Specifically, referring to FIGS. 1 and 3, the length L1, in the longitudinal direction, of the negative electrode coated portion extending from the longitudinal end portion 310 of the positive electrode may be 10% or greater, 11% or greater, or 12% or greater, and 34% or less, 33% or less, or 32% or less based on 100% of the length L2, in the longitudinal direction, of the negative electrode uncoated portion extending from the end portion of the negative electrode coated portion.

When the length, in the longitudinal direction, of the negative electrode coated portion extending from the longitudinal end portion of the positive electrode satisfies the above-described range, even if the negative electrode in-tab is included, it is possible to facilitate sliding of the negative electrode during charging and discharging of a battery by controlling an input amount of the negative electrode in the core part, and to reduce relative sliding of the end portion of the positive electrode to the negative electrode. Specifically, the effect of reducing the relative sliding of the end portion of the positive electrode due to the control of the length, in the longitudinal direction, of the negative electrode coated portion within the above-described range may be better when the negative electrode in-tab is included.

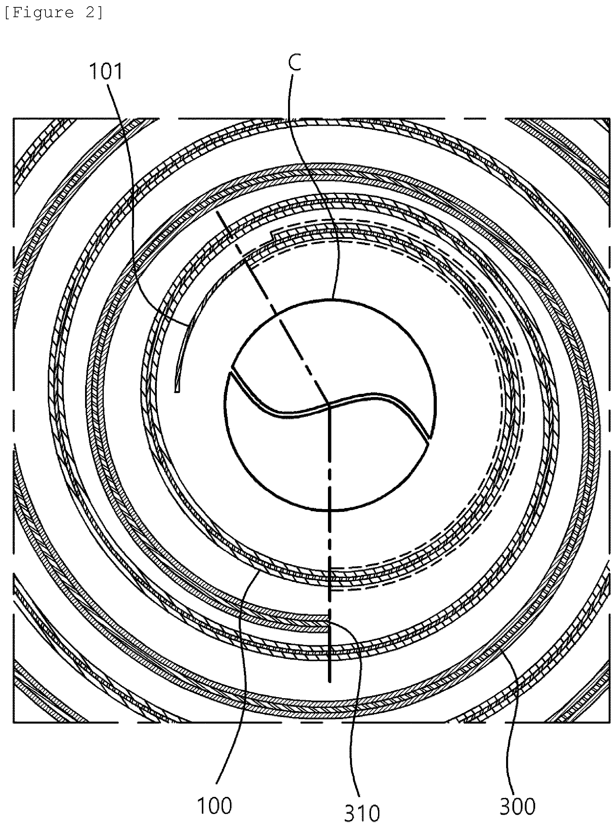

According to an exemplary embodiment of the present invention, the length, in the longitudinal direction, of the negative electrode extending from the longitudinal end portion of the positive electrode may be 0.5 turn or more and 1 turn or less from the longitudinal end portion of the positive electrode. Specifically, referring to FIGS. 2 and 3, the lengthL1+L2, in the longitudinal direction, of the negative electrode extending from the longitudinal end portion 310 of the positive electrode may be 0.6 turn or more or 0.7 turn or more and 0.9 turn or less or 0.8 turn or less from the longitudinal end portion 310 of the positive electrode.

When the length, in the longitudinal direction, of the negative electrode extending from the longitudinal end portion of the positive electrode satisfies the above-described range, the negative electrode may have a length of the negative electrode uncoated portion that is suitable when a negative electrode in-tab is not provided. For example, when the negative electrode in-tab is not provided, the length L2 of the negative electrode uncoated portion may be about 3 mm. In addition, the effect of reducing the relative sliding of the end portion of the positive electrode due to the control of the length, in the longitudinal direction, of the negative electrode within the above-described range may be better when the negative electrode in-tab is not included.

According to an exemplary embodiment of the present invention, the length, in the longitudinal direction, of the negative electrode coated portion extending from the longitudinal end portion of the positive electrode may be 150% or greater and 230% or less based on 100% of the length, in the longitudinal direction, of the negative electrode uncoated portion extending from the end portion of the negative electrode coated portion. Specifically, referring to FIGS. 2 and 3, the length L1, in the longitudinal direction, of the negative electrode coated portion extending from the longitudinal end portion 310 of the positive electrode may be 155% or greater, 160% or greater, or 165% or greater, and 225% or less, 220% or less, or 215% or less based on 100% of the length L2, in the longitudinal direction, of the negative electrode uncoated portion extending from the end portion of the negative electrode coated portion.

When the length, in the longitudinal direction, of the negative electrode coated portion extending from the longitudinal end portion of the positive electrode satisfies the above-described range, even if the negative electrode in-tab is not included, it is possible to facilitate sliding of the negative electrode during charging and discharging of a battery by controlling an input amount of the negative electrode in the core part, and to reduce relative sliding of the end portion of the positive electrode to the negative electrode. Specifically, the effect of reducing the relative sliding of the end portion of the positive electrode due to the control of the length, in the longitudinal direction, of the negative electrode coated portion within the above-described range may be better when the negative electrode in-tab is not included.

According to an exemplary embodiment of the present invention, the length, in the longitudinal direction, of the negative electrode may be greater than the length, in the longitudinal direction, of the positive electrode. In addition, a length, in the longitudinal direction, of the separator located on one surface and an opposite side of the negative electrode may be greater than the length, in the longitudinal direction, of the positive electrode.

When the negative electrode and the separator extend longer than the longitudinal end portion of the positive electrode, lithium ions can be more easily transferred from the positive electrode to the negative electrode in a chemical reaction of the lithium-ion battery. When the length or width of the negative electrode is formed greater, an area of the negative electrode for receiving lithium ions increases to prevent a decrease in charge/discharge efficiency and to improve the stability and life characteristics of the battery.

According to an exemplary embodiment of the present invention, a weight of the negative electrode coated portion extending from the longitudinal end portion of the positive electrode and additionally wound may be 70% or greater and less than 110% based on 100% of a weight of the negative electrode uncoated portion extending from the end portion of the negative electrode coated portion and additionally wound. Specifically, referring to FIGS. 1 and 3, the weight of the negative electrode coated portion 10 extending from the longitudinal end portion 310 of the positive electrode may be 70% or greater and 100% or less or 80% or greater and 100% or less based on 100% of the weight of the negative electrode uncoated portion 12 extending from the end portion of the negative electrode coated portion.

When the above-described weight range of the negative electrode coated portion is satisfied, it is possible to facilitate sliding of the negative electrode during charging and discharging of a battery by controlling an input amount of the negative electrode in the core part, and to reduce relative sliding of the end portion of the positive electrode to the negative electrode. Specifically, the effect of reducing the relative sliding of the end portion of the positive electrode due to the control of the weight of the negative electrode coated portion in the core part within the foregoing range may be better when a negative electrode in-tab is included.

According to an exemplary embodiment of the present invention, the negative electrode coated portion 10 may include a single-side coated portion 11 including one surface of the negative electrode current collector provided with the negative electrode active material layer and the other surface on which the negative electrode active material layer is not provided and the negative electrode current collector is directly exposed. Specifically, the single-side coated portion 11 may have one surface facing the winding axis of the negative electrode current collector and provided with a negative electrode active material layer, and the other surface on which a negative electrode active material layer is not provided and the negative electrode current collector is directly exposed. When the single-side coated portion is included, an amount of a negative electrode active material applied to a region not facing the positive electrode can be minimized to secure economic efficiency. Additionally, when a negative electrode active material layer is provided on one surface of the single-side coated portion facing the winding axis of the negative electrode current collector, the formation of steps due to the thickness of the negative electrode active material can be minimized.

According to an exemplary embodiment of the present invention, the length, in the longitudinal direction, of the negative electrode coated portion extending from the longitudinal end portion of the positive electrode may be 5 mm or greater and less than 7 mm. Specifically, referring to FIGS. 1 and 3, the length L1, in the longitudinal direction, of the negative electrode coated portion extending from the longitudinal end portion 310 of the positive electrode may be 5.2 mm or greater, 5.4 mm or greater or 5.6 mm or greater, and 6.8 mm or less, 6.6 mm or less or 6.4 mm or less.

When the length range, in the longitudinal direction, of the negative electrode coated portion extending from the longitudinal end portion of the positive electrode described above is satisfied, it is possible to facilitate sliding of the negative electrode during charging and discharging of a battery by controlling an input amount of the negative electrode in the core part, and to reduce relative sliding of the end portion of the positive electrode to the negative electrode. Specifically, the effect of reducing the relative sliding of the end portion of the positive electrode due to the control of the length, in the longitudinal direction, of the negative electrode coated portion within the above-described range may be better when the negative electrode in-tab is included.

According to an exemplary embodiment of the present invention, the negative electrode may be a negative electrode coated portion formed with a negative electrode active material layer on the negative electrode current collector, a negative electrode uncoated portion not formed with the negative electrode active material layer, and a tab on the negative electrode uncoated portion. Specifically, referring to FIGS. 1 and **3****,** the negative electrode 100 may include a negative electrode uncoated portion 12 and a negative electrode tab 50 provided on the negative electrode uncoated portion. Accordingly, the manufactured electrode assembly may include one or more negative electrode tabs. That is, the manufactured electrode assembly may include a negative electrode in-tab and may further include a protective tape 40 for preventing a short circuit due to a thickness of the negative electrode in-tab.

According to an exemplary embodiment of the present invention, a length, in the longitudinal direction, of the negative electrode single-side coated portion may be 0 mm or greater and 2 mm or less. Specifically, referring to FIG. 3, a length L1', in the longitudinal direction, of the negative electrode single-side coated portion may be 0.1 mm or greater, 0.3 mm or greater, 0.5 mm or greater, or 0.7 mm or greater, and 1.9 mm or less, 1.7 mm or less, 1.5 mm or less, or 1.3 mm or less, and for example, may be 1 mm. When the above-described length range, in the longitudinal direction, of the negative electrode single-side coated portion is satisfied, it is possible to facilitate sliding of the negative electrode during charging and discharging of a battery by controlling an input amount of the negative electrode in the core part, and to reduce relative sliding of the end portion of the positive electrode to the negative electrode. Specifically, the effect of reducing the relative sliding of the end portion of the positive electrode due to the control of the length, in the longitudinal direction, of the negative electrode single-side coated portion within the above-described range may be better when the negative electrode in-tab is included.

According to an exemplary embodiment of the present invention, the negative electrode active material layer may include a negative electrode active material including one or more selected from the group consisting of a silicon-based material and a carbon-based material. In addition, the negative electrode active material layer may further include a negative electrode conductive material and a negative electrode binder, and for the negative electrode active material, the negative electrode conductive material, and the negative electrode binder, materials that are used in the art may be used without limitation.

According to an exemplary embodiment of the present invention, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, of the like may be used. Specifically, transition metals that adsorb carbon well, such as copper and nickel, may be used for the negative electrode current collector. A thickness of the negative electrode current collector may be 6 µm or greater and 80 µm or less. However, the thickness of the negative electrode current collector is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

According to an exemplary embodiment of the present invention, the negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

According to an exemplary embodiment of the present invention, the electrode assembly may include a plurality of separators. For example, the electrode assembly may have a structure in which a separator/a negative electrode/a separator/a positive electrode are sequentially stacked. The separator serves to separate the negative electrode and the positive electrode and to provide a migration path of lithium ions, any separator may be used as the separator without particular limitation as long as it is typically used in a secondary battery, and particularly, a separator having high moisture-retention ability for an electrolyte, as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric formed of high melting point glass fibers, polyethylene terephthalate fibers, or the like may be used. In addition, the separator may typically have a thickness of 10 µm or greater and 20 µm or less. A separator in which the above-described separator material is used as a base layer and a slurry containing a ceramic component or a polymer material so as to secure heat resistance or mechanical strength is coated on the base layer may be used. The separator having a single layer or multilayer structure may be selectively used.

According to an exemplary embodiment of the present invention, the positive electrode may include a positive electrode current collector and a positive electrode active material layer provided on the positive electrode current collector. Specifically, referring to FIG. **3****,** the positive electrode 300 may include a positive electrode current collector 301 and positive electrode active material layers 302 and 303 formed on one surface or both surfaces of the positive electrode current collector 301 and including a positive electrode active material. In other words, the positive electrode active material layer is formed on a positive electrode coated portion of the positive electrode current collector, and a surface not provided with the positive electrode active material layer may be referred to as a positive electrode uncoated portion.

According to an exemplary embodiment of the present invention, the positive electrode current collector may include a positive electrode coated portion coated with a positive electrode active material and a positive electrode uncoated portion not coated with the positive electrode active material, and may include a tab on the positive electrode uncoated portion. Specifically, the positive electrode current collector may include a positive electrode uncoated portion, and a positive electrode tab formed on the positive electrode uncoated portion.

According to an exemplary embodiment of the present invention, in the core part of the electrode assembly, the positive electrode may include a positive electrode current collector; and a positive electrode active material layer provided on at least one surface of the positive electrode current collector and having a longitudinal end portion at the same position as the positive electrode current collector. Specifically, referring to FIG. 3 in the core part of the electrode assembly, a positive electrode 300, separators 20 and 20' and a negative electrode 100 are stacked and wound, and the positive electrode 300 may include a positive electrode current collector 301, and positive electrode active material layers 302 and 303 provided on at least one surface of the positive electrode current collector 301 and each having a longitudinal end portion 310 at the same position as the positive electrode current collector 301. That is, one end portion 310, in the longitudinal direction, of the positive electrode may have a free-edge form.

With this, an area of an unnecessary uncoated portion on a positive electrode current collector can be reduced to secure economic efficiency, and a slitting process can be performed after forming an active material layer on an electrode, so that the slitting process and a roll-to-roll process including a winding process can be performed more efficiently. Here, the description 'same position' means that the end portions in the longitudinal direction are the same, and may include a case where the end portions are formed at substantially the same positions due to a process error that may occur in the slitting process or the like.

According to an exemplary embodiment of the present invention, the positive electrode current collector is not particularly limited as long as it has conductivity without inducing a chemical change in the battery. Specifically, for the positive electrode current collector, stainless steel, aluminum, nickel, titanium, fired carbon, aluminum or stainless steel each surface treated with carbon, nickel, titanium, silver, or the like, or the like may be used. That is, the positive electrode current collector may be provided in the form of surface-treated stainless steel, an aluminum foil or the like.

In addition, the positive electrode current collector may typically have a thickness of 3 to 50 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

According to an exemplary embodiment of the present invention, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}O₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present invention, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity in a battery to be configured. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, based on the winding axis of the electrode assembly, an angle between an initial position of the longitudinal end portion of the negative electrode and a position of the longitudinal end portion of the negative electrode after additional charging and discharging 200 times or more at 40°C or higher may be 5° or greater. Specifically, based on the winding axis of the electrode assembly, the angle between the initial position of the longitudinal end portion of the negative electrode and the position of the longitudinal end portion of the negative electrode after additional charging and discharging 200 times or more at 40°C or higher may be 5° or greater, 10° or greater, 15° or greater, or 20° or greater, and 45° or less, 40° or less, 35° or less, 30° or less, or 25° or less, and for example, may be 5° or greater and 30° or less. More specifically, the initial position of the longitudinal end portion of the negative electrode may be measured after activation. Here, the term 'after activation' may mean after a predetermined number of cycles for manufacturing a secondary battery and finishing a product. Specifically, the 'after activation' may include a storage state before start of active use including multiple cycles for power supply purposes, that is, before and after sale, and a state in which self-discharge during storage has been made.

When the above-described angle range is satisfied, it is possible to facilitate sliding of the negative electrode during charging and discharging of a battery by controlling an input amount of the negative electrode in the core part, and to reduce relative sliding of the end portion of the positive electrode to the negative electrode.

According to an exemplary embodiment of the present invention, when additional charging and discharging are performed 200 times or more at 40°C or higher after activation, an angle between the positive electrode and the negative electrode may be 25° or less. Specifically, the positive electrode may include a first surface in a direction of the winding axis of the electrode assembly and a second surface opposite to the first surface, and a first extension line drawn by extending a straight line connecting two points where a direction of curvature changes at a spaced distance of 5 mm from the longitudinal end portion of the positive electrode on the first surface of the positive electrode and a second extension line drawn by extending a straight line connecting two points at a spaced distance of 5 mm from the longitudinal end portion of the positive electrode on a surface of the negative electrode facing the first surface of the positive electrode may form an angle of 25° or less. When the above-described angle range is satisfied, it is possible to prevent damage to the negative electrode and separator due to relative sliding of the end portion of the positive electrode, and prevent an internal short circuit between the positive electrode and negative electrode, resulting in improvements in battery stability and life characteristics.

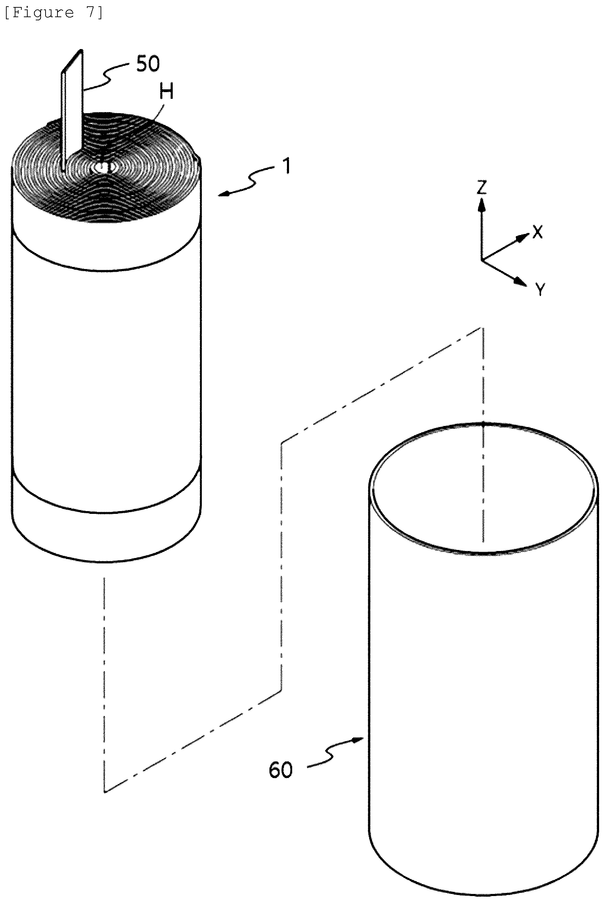

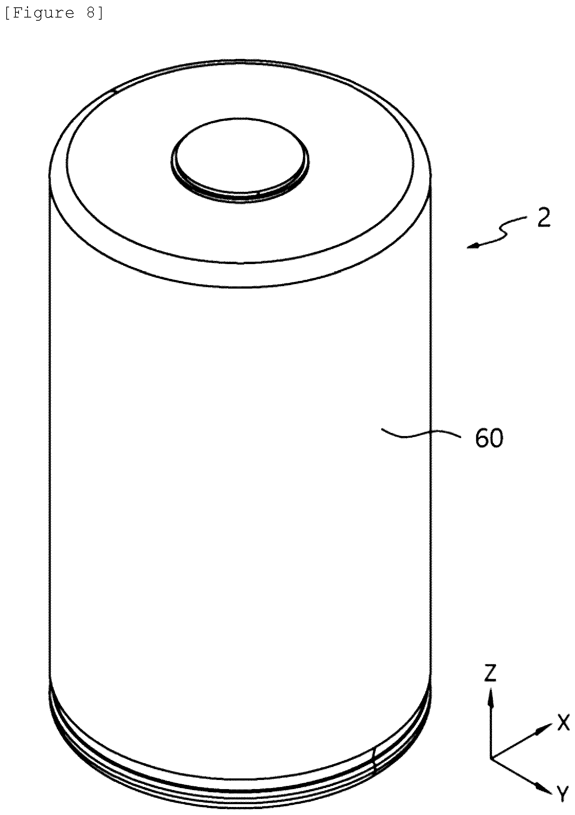

FIGS. 7 and 8 show an electrode assembly and a secondary battery including the same according to an exemplary embodiment of the present invention.

An exemplary embodiment of the present invention provides a secondary battery including the electrode assembly described above, and a battery case for accommodating the electrode assembly. Specifically, referring to FIGS. 7 and 8, the secondary battery 2 may include an electrode assembly 1 according to the above-described exemplary embodiment and a battery case 60 for accommodating the electrode assembly 1. More specifically, the electrode assembly 1 may or may not include a negative electrode tab 50.

The secondary battery according to an exemplary embodiment of the present invention can prevent damage to the negative electrode and separator due to relative sliding of the end portion of the positive electrode, and prevent an internal short circuit between the positive electrode and negative electrode, resulting in improvements in battery stability and life characteristics.

According to an exemplary embodiment of the present invention, the battery case may have a cylindrical shape. Specifically, the battery case may have a cylindrical, prismatic, or pouch shape depending on use applications. However, the battery case having a cylindrical shape may be more suitable for accommodating an electrode assembly. When the battery case has a cylindrical shape, a secondary battery including the electrode assembly and a battery case for accommodating the electrode assembly may have a cylindrical shape.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

Below, Examples will be described in detail to specifically describe the present invention. However, the Examples according to the present invention may be modified in other forms, and the scope of the present invention is not construed as being limited to the following Examples. The Examples of the present specification are provided to more completely explain the present invention to one skilled in the art.

### Mode for Invention

### Example

### Example 1

### Preparation of Electrode Assembly

A positive electrode having a thickness of 154 µm was prepared by preparing an Al foil having a thickness of 15 µm and a length of 63.9 mm in the width direction as a positive electrode current collector, and applying and drying a positive electrode active material slurry including an NMCA (Ni-Mn-Co-Al) composite having a Ni content of 92% or more as a positive electrode active material and CNTs as a conductive material on the positive electrode current collector to form a positive electrode active material layer.

Next, a negative electrode having a thickness of 187 µm was prepared by preparing a Cu foil having a thickness of 8 µm and a length of 65.1 mm in the width direction as a negative electrode current collector, and applying and drying a negative electrode active material slurry including artificial graphite and natural graphite as a negative electrode active material in 50 parts by weight, respectively, on the negative electrode current collector to form a negative electrode active material layer.

Note that two sheet-like separators made of polyethylene were prepared.

Then, the negative electrode and positive electrode were sequentially added to manufacture an electrode assembly. In this case, the core part of the electrode assembly was provided with a negative electrode coated portion having a length, in the longitudinal direction, of 6 mm (a length, in the longitudinal direction, of the negative electrode single-side coated portion is 1 mm) and a negative electrode uncoated portion having a length, in the longitudinal direction, of 19 mm, and made to have conditions according to Table 1 below and a structure according to FIG. 1.

### Preparation of Secondary Battery

A secondary battery was prepared by inserting the electrode assembly into a cylindrical battery case, injecting an electrolyte solution in which ethylene carbonate (EC), ethyl methyl carbonate (EMC), and dimethyl carbonate (DMC) were mixed at a volume ratio (vol%) of 20:5:75 and LiPF₆ was dissolved to be 0.7 M, and sealing the cylindrical battery case with a cap assembly.

### Comparative Example 1 and Comparative Example 2

An electrode assembly and a secondary battery were prepared in the same manner as in Example 1, except that the lengths, in the longitudinal direction, of the negative electrode coated portion and negative electrode uncoated portion extending from the longitudinal end portion of the positive electrode and additionally wound were adjusted to the conditions according to Table 1 below.

**[Table 1]**

| | Example 1 | Comparative Example 1 | Comparative Example 2 |
|---|---|---|---|
| Negative electrode in-tab | O | O | O |
| Width of negative electrode (mm) | 65 | 65 | 65 |
| Density of negative electrode active material layer (mg/mm²₎ | 0.3 | 0.3 | 0.3 |
| Density of negative electrode current collector (mg/mm²₎ | 0.07 | 0.07 | 0.07 |
| Length of negative electrode uncoated portion (L2, mm) | 19 | 19 | 19 |
| Length of negative electrode coated portion (L1, mm) | 6 | 7 | 19 |
| Total length of negative electrode coated/uncoated portions (mm) | 23 | 26 | 39 |
| Length of negative electrode uncoated portion (L2, turn) | 2 | 2 | 2 |
| Length of negative electrode coated portion (L1, turn) | 0.5 | 0.58 | 1.58 |
| Total length of negative electrode coated/uncoated portions (turn) | 2.5 | 2.58 | 3.58 |
| Total area of negative electrode coated/uncoated portions (mm²) | 1600 | 1700 | 2530 |
| Weight of negative electrode uncoated portion (mg) | 90 | 90 | 90 |
| Weight of negative electrode coated portion (mg) | 80 | 110 | 320 |
| Total weight of negative electrode coated/uncoated portions (mg) | 170 | 200 | 410 |
| Ratio of total lengths | 0.63 | 0.67 | 1 |
| Ratio of total weights | 0.42 | 0.48 | 1 |
| Occurrence or not of impingement | X | O | O |

### Experimental Examples

### Experimental Example 1 - Cycle Stability Evaluation

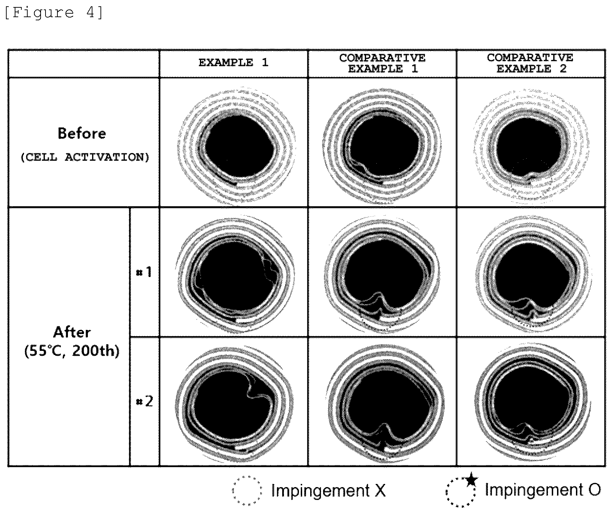

The secondary batteries prepared in Example 1 and Comparative Examples 1 and 2 were subjected to 3 cycles of 4.2 V-2.5 V, 0.2 C charging, and 0.2 C discharging, and charged to an SOC of 30%, respectively, leading to preparation of activated secondary batteries. Thereafter, the activated secondary batteries were subjected to 200 cycles under conditions of 4.3 V-2.85 V 0.5 C/1 C at 55°C, leading to preparation of secondary batteries having undergone cycles. For the short-term cycle stability evaluation, the core parts of the activated secondary batteries and the secondary batteries having undergone cycles were subjected to computed tomography (CT) to check the presence or absence of the core impingement, and the images are shown in FIG. 4.

### Experimental Example 2 - Negative Sliding Evaluation

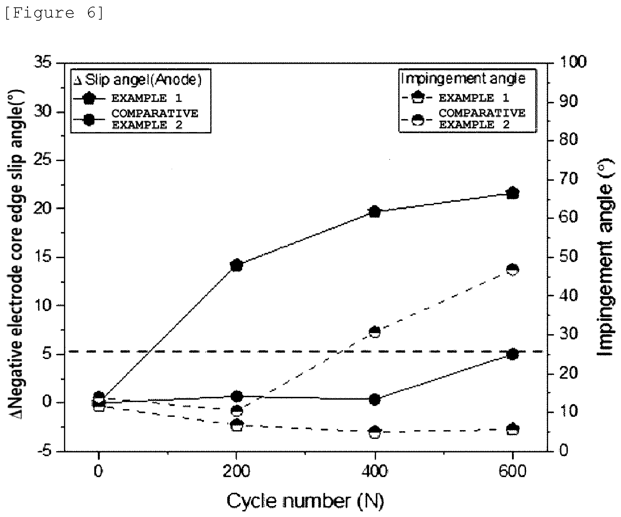

The core parts of the secondary batteries prepared in Example 1, Comparative Example 1, and Comparative Example 2 were subjected to computed tomography (CT), the change in angle between the initial position of the longitudinal end portion of the negative electrode and the position of the longitudinal end portion of the negative electrode after the cycles was measured based on the winding axis of the electrode assembly, the change in angle was remeasured every 200 cycles, and results are shown in FIG. 6 below.

### Experimental Example 3 - Core Impingement Evaluation

In the following method, the secondary batteries prepared in Example 1 and Comparative Examples 1 and 2 were subjected to 3 cycles of 4.2 V-2.5 V, 0.2 C charging, and 0.2 C discharging, and charged to an SOC of 30%, respectively, leading to preparation of activated secondary batteries. The core parts of the activated secondary batteries were subjected to computed tomography to evaluate whether core impingement has occurred according to a following method for evaluating whether core impingement has occurred, whether the core impingement has occurred was reevaluated every 200 cycles, and results were shown in FIG. 6.

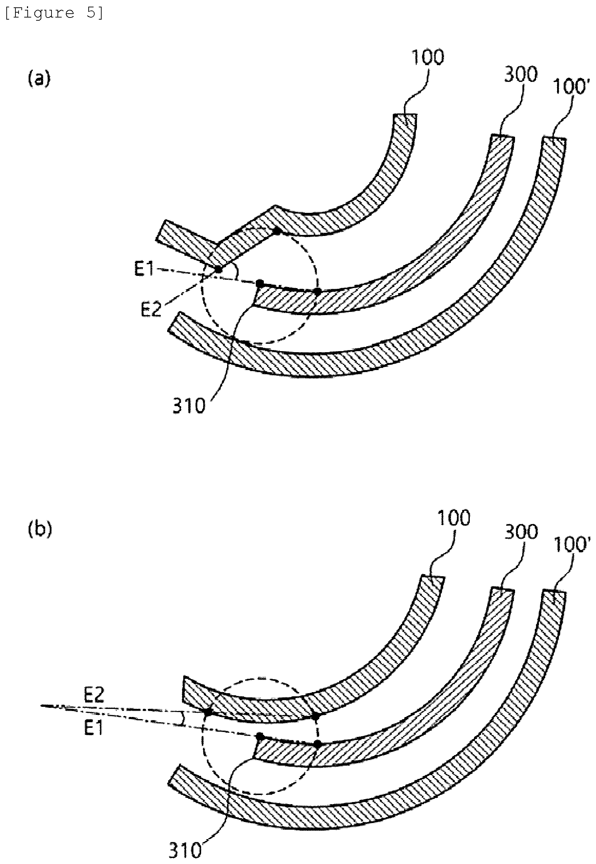

FIG. 5 schematically shows a method for evaluating whether core impingement has occurred. Specifically, FIG. 5(a) schematically shows a method for evaluating whether the core impingement has occurred when deformation occurred in the negative electrode, and FIG. 5(b) schematically shows a method for evaluating whether the core impingement has occurred when deformation did not occur in the negative electrode.
1) On the first surface of the positive electrode 300, a first extension line E1 is drawn by extending a straight line connecting the longitudinal end portion 310 of the positive electrode and a point 5 mm spaced from the end portion.
2-1) When the negative electrode is deformed
   In the core part of the electrode assembly, on the surface of the negative electrode 100 facing the first surface of the positive electrode, a second extension line E2 is drawn by extending a straight line connecting two points where a direction of curvature changes within a spacing distance of 5 mm from the longitudinal end portion 310 of the positive electrode.
2-2) When there is no deformation in the negative electrode
   In the core part of the electrode assembly, on the surface of the negative electrode 100 facing the first surface of the positive electrode, a second extension line E2 is drawn by extending a straight line connecting two points 5 mm spaced from the longitudinal end portion 310 of the positive electrode.
3) When an angle from the first extension line E1 to the second extension line E2 in a counterclockwise direction with respect to the intersection of the first extension line E1 and the second extension line E2 exceeded 25°, it was evaluated that the core impingement occurred.

On the other hand, in the case where an unknown secondary battery (unknown cell) is acquired, the above method for evaluating whether the core impingement has occurred may be applied in a manner of evaluating whether the core impingement has occurred at the time of initial acquisition, reevaluating whether the core impingement has occurred every 200 cycles, and comparing and analyzing the result with the core impingement conditions of the secondary battery of the exemplary embodiment according to the present invention.

Referring to Table 1 and FIGS. 4 to 6, it was confirmed that core impingement did not occur in the secondary battery prepared in Example 1 in the cycle stability evaluation, but that core impingement occurred in both the secondary batteries prepared in Comparative Example 1 and Comparative Example 2. Specifically, it was confirmed that regarding the secondary batteries prepared in Comparative Example 1 and Comparative Example 2, core impingement did not occur in the secondary batteries after activation, but core impingement occurred after 200 cycles at 55°C, which were high-temperature long-term cycles.

Referring to FIG. 6, it was confirmed that the secondary battery prepared in Example 1 exhibited the negative electrode core sliding in which, based on the winding axis of the electrode assembly, the change in angle between the initial position of the longitudinal end portion of the negative electrode and the position of the longitudinal end portion of the negative electrode gradually decreased after 200 cycles but was relatively high such as 5° or greater, but that the secondary battery prepared in Comparative Example 2 exhibited the negative electrode core sliding in which the change in angle was relatively low such as 5° or less even after 400 cycles due to the negative electrode core sliding being inhibited. In addition, it was confirmed that in the secondary battery prepared in Comparative Example 2, the angle formed between the positive electrode and the negative electrode significantly increased after 200 cycles, and the angle formed between the positive electrode and the negative electrode was 25° or greater after 400 cycles, showing that core impingement occurred.

With this, it was confirmed that in the secondary battery according to Example 1 in which the input amount of the negative electrode in the core part was controlled to a specific range, especially when the negative electrode in-tab was included, the damage to the negative electrode and separator due to the longitudinal end portion of the positive electrode, i.e., the occurrence frequency and degree of core impingement due to contraction/expansion of the electrode assembly, was significantly reduced, as compared with the secondary batteries according to Comparative Examples 1 and 2. Specifically, it was confirmed that in the secondary batteries according to Comparative Examples 1 and 2 where the length, in the longitudinal direction, of the negative electrode coated portion exceeded 0.5 turn from the longitudinal end portion of the positive electrode, that is, 60% or greater based on 100% of the circumference of the inner peripheral surface of the electrode assembly, or the weight of the negative electrode coated portion was 110% or greater based on 100% of the weight of the negative electrode uncoated portion, the battery stability and life characteristics were inferior to those of the secondary battery according to Example 1 in which the input amount of the negative electrode in the core part satisfied a specific range.

That is, it can be seen that the electrode assembly according to an exemplary embodiment of the present invention can facilitate sliding of the negative electrode during charging and discharging of a battery by controlling the input amount of the negative electrode in the core part and can reduce relative sliding of the end portion of the positive electrode to the negative electrode, and that the secondary battery according to an exemplary embodiment of the present invention including the electrode assembly can prevent damage to the negative electrode and separator due to relative sliding of the end portion of the positive electrode and prevent an internal short circuit between the positive electrode and the negative electrode, resulting in improvements in battery stability and life characteristics.

The foregoing detailed description is intended to illustrate and explain the present invention. In addition, the foregoing description is only to show and describe the preferred embodiment of the present invention, and as described above, the present invention can be used in various other combinations, changes and environments, and can be changed and modified within the scope of the concept of the invention disclosed in the present specification, within the scope equivalent to the above disclosure and/or within the scope of skill or knowledge in the art. Accordingly, the foregoing detailed description of the invention is not intended to limit the invention to the disclosed embodiments. Also, the appended claims should be construed to include other embodiments as well.

### <Explanation of Reference Numerals and Symbols>

C: winding core
H: hollow portion of core part
100: negative electrode
101: negative electrode current collector
102, 103: negative electrode active material layer
10: negative electrode coated portion
11: negative electrode single-side coated portion
12: negative electrode uncoated portion
20, 20': separator
300: positive electrode
301: positive electrode current collector
302, 303: positive electrode active material layer
310: longitudinal end portion of positive electrode
40: protective tape
50: negative electrode tab
L1: length, in longitudinal direction, of negative electrode coated portion
L1': length, in longitudinal direction, of negative electrode single-side coated portion
L2: length, in longitudinal direction, of negative electrode uncoated portion
E1: first extension line
E2: second extension line
60: battery case
1: electrode assembly
2: secondary battery

## Claims

1. An electrode assembly in which a negative electrode, a separator, and a positive electrode are sequentially stacked and wound,
wherein in a core part of the electrode assembly,
the negative electrode comprises a negative electrode coated portion comprising a negative electrode current collector and a negative electrode active material layer provided on at least one surface of the negative electrode current collector; and a negative electrode uncoated portion comprising the negative electrode current collector not provided with the negative electrode active material layer, and
in a longitudinal direction, a length of the negative electrode coated portion extending from a longitudinal end portion of the positive electrode is 0.5 turn or less from the longitudinal end portion of the positive electrode.

2. The electrode assembly of claim 1, wherein in the longitudinal direction, a length of the negative electrode extending from the longitudinal end portion of the positive electrode is 1.5 turns or more and 2.5 turns or less from the longitudinal end portion of the positive electrode.

3. The electrode assembly of claim 2, wherein in the longitudinal direction, the length of the negative electrode coated portion extending from the longitudinal end portion of the positive electrode is 35% or less based on 100% of a length of the negative electrode uncoated portion extending from an end portion of the negative electrode coated portion.

4. The electrode assembly of claim 1, wherein in the longitudinal direction, a length of the negative electrode extending from the longitudinal end portion of the positive electrode is 0.5 turn or more and 1 turn or less from the longitudinal end portion of the positive electrode.

5. The electrode assembly of claim 4, wherein in the longitudinal direction, the length of the negative electrode coated portion extending from the longitudinal end portion of the positive electrode is 150% or greater and 230% or less based on 100% of a length of the negative electrode uncoated portion extending from an end portion of the negative electrode coated portion.

6. The electrode assembly of claim 1, wherein a weight of the negative electrode coated portion extending from the longitudinal end portion of the positive electrode is 70% or greater and less than 110% based on 100% of a weight of the negative electrode uncoated portion extending from an end portion of the negative electrode coated portion.

7. The electrode assembly of claim 1, wherein the negative electrode coated portion includes a single-side coated portion having one surface of the negative electrode current collector provided with the negative electrode active material layer, and the other surface on which the negative electrode active material layer is not provided and wherein the negative electrode current collector is exposed.

8. The electrode assembly of claim 1, wherein in the longitudinal direction, the length of the negative electrode coated portion extending from the longitudinal end portion of the positive electrode is 5 mm or greater and less than 7 mm.

9. The electrode assembly of claim 1, wherein based on a winding axis of the electrode assembly, an angle between an initial position of a longitudinal end portion of the negative electrode and a position of the longitudinal end portion of the negative electrode is 5° or greater after charging and discharging at least 200 times at 40°C or higher.

10. The electrode assembly of claim 9, wherein the initial position of the longitudinal end portion of the negative electrode is measured after activation.

11. The electrode assembly of claim 1, wherein the positive electrode has a first surface in a direction of a winding axis of the electrode assembly and a second surface opposite to the first surface, and
wherein a first extension line drawn by extending a straight line connecting two points where a direction of curvature changes at a spaced distance of 5 mm from the longitudinal end portion of the positive electrode on the first surface of the positive electrode and a second extension line drawn by extending a straight line connecting two points at a spaced distance of 5 mm from the longitudinal end portion of the positive electrode on a surface of the negative electrode facing the first surface of the positive electrode form an angle of 25° or less therebetween.

12. The electrode assembly of claim 1, wherein in the core part of the electrode assembly, the positive electrode includes a positive electrode current collector, and a positive electrode active material layer provided on at least one surface of the positive electrode current collector and having a longitudinal end portion at the same position as the positive electrode current collector.

13. The electrode assembly of claim 1, wherein in the core part of the electrode assembly, the negative electrode uncoated portion further includes a negative electrode tab provided on one surface of the negative electrode current collector.

14. A secondary battery comprising:
the electrode assembly according to any one of claims 1 to 13; and
a battery case for accommodating the electrode assembly.

15. The secondary battery of claim 14, wherein the battery case has a cylindrical shape.
